# FASCICULE DE BREVET EUROPEEN

(11) **EP 0 891 247 B1**
(45) Date de publication et mention de la délivrance du brevet: **12.06.2002**
(21) Numéro de dépôt: 97905363.4
(22) Date de dépôt: 17.03.1997
(51) Int. Cl.: B29C 35/02, B29C 43/26

(54) **PROCEDE DE MOULAGE DE PROFILES EN ELASTOMERE**
VERFAHREN ZUR FORMUNG VON PROFILIERTEN GEGENSTÄNDEN AUS ELASTOMEREN WERKSTOFFEN
METHOD FOR MOULDING ELASTOMERIC PROFILE MEMBERS

(30) Priorité: 27.03.1996 FR 9604081
(43) Date de publication de la demande: 20.01.1999
(73) Titulaire: De Tonnac, Jacques, 01200 Bellegarde-sur-Valserine (FR)
(72) Inventeur: De Tonnac, Jacques, 01200 Bellegarde-sur-Valserine (FR)
(74) Mandataire: Moinas, Michel
(86) Numéro de dépôt international: IB9700264
(87) Numéro de publication internationale: WO9735702

(56) Documents cités:
- CH-A- 665 009
- DE-A- 2 930 289
- DE-A- 4 038 656
- FR-A- 1 215 194
- FR-A- 1 500 618
- GB-A- 1 266 866
- GB-A- 191 208 554
- US-A- 2 184 630
- US-A- 2 343 117
- US-A- 4 680 071

## Description

La présente invention est relative à un procédé de moulage pour la réalisation de profilés en élastomère, par exemple de lanières, courroies, joints d'étanchéité, etc., et notamment pour obtenir des profilés fermés. Plus précisément, le moulage a lieu de manière séquentielle, le procédé selon l'invention étant particulièrement adapté pour obtenir des profilés en élastomère de grande circonférence, c'est à dire par exemple des profilés d'au moins un mètre de diamètre. On entend généralement par "moulage" les opérations combinées de moulage et de vulcanisation d'une ébauche.

L'invention se rapporte d'autre part à un dispositif portable ou "moule" portable permettant de fabriquer ou de finir les profilés, en particulier les joints, in situ, c'est-à-dire sur le chantier même où ils doivent être mis en oeuvre. Cette version portable présente un grand intérêt en supprimant les délais de livraison, la tenue de stocks ad hoc et surtout par la possibilité de réaliser directement ou de finir sur place un profilé à l'exacte dimension requise par les pièces à assembler. Elément déterminant, cela permet alors les opérations de maintenance directement sur site, au moment même où on constate par exemple qu'un joint ou autre profilé est à changer.

Pour la clarté et la simplicité de l'exposé, l'invention sera décrite ci-après en relation avec des joints ou des joints d'étanchéité, mais il faut bien comprendre qu'elle concerne aussi bien d'autres types de profilés, tels que lanières, courroies, et analogues, qui posent les mêmes problèmes de réalisation et de finition que les joints.

Les procédés connus pour la réalisation de joints d'étanchéité en élastomère font généralement appel aux techniques de moulage par compression, par injection, ou d'extrusion.

Pour obtenir des joints de grande circonférence, les techniques de moulage par compression avec moule circulaire et fermé et par injection ne sont pas adaptées. En effet, dans ces deux cas, le moule utilisé définit le profil du joint et également son diamètre : en conséquence, la circonférence maximale du joint est limitée par les capacités dimensionnelles de la presse recevant le moule et par des critères d'encombrement. En outre, pour un même profil de joint, il est nécessaire d'utiliser un nouveau moule pour chaque nouveau diamètre.

Des joints de grande circonférence sont généralement obtenus en utilisant un procédé d'extrusion. Dans un tel procédé, le moulage du joint a lieu de manière dynamique, en continu, par avancement dans une filière assurant sa mise en forme. Pour un profil de joint donné, une unique filière est nécessaire quel que soit le diamètre du joint désiré.

Toutefois, un inconvénient majeur de ce procédé découle de la nécessité d'abouter postérieurement au moulage les deux extrémités du joint ainsi moulé, afin d'obtenir un élément fermé. Cet aboutement s'opère généralement par collage à chaud ou à froid, ce qui se traduit par une discontinuité de la vulcanisation et, incidemment, par une altération des caractéristiques intrinsèques du joint, notamment de la résistance à la rupture.

De plus, les tolérances dimensionnelles de la section du joint obtenu par extrusion sont relativement larges, par exemple de l'ordre de ± 0,6 mm pour une section de 15 mm, et les états de surface relativement grossiers, deux paramètres qui influent fortement sur la qualité de l'étanchéité.

Le brevet DE-A-40 38 656 décrit un procédé de moulage séquentiel, adapté à la réalisation de courroies en caoutchouc, l'ébauche de ces courroies devant être préalablement fermée par des moyens additionnels, le moulage ayant lieu après que cette ébauche ait été mise sous tension entre deux poulies en vis-à-vis dont l'espacement est réglable en fonction de la longueur désirée de la courroie.

Dans ce procédé, la longueur des éléments est forcément limitée par l'espacement entre les poulies, qui ne peut pas être trop important pour des raisons d'encombrement ; de plus, la vulcanisation de portions contiguës de courroie provoque des effets de bord, ou survulcanisation, ce qui entraîne là aussi des inégalités dans les caractéristiques des éléments finis.

Le but de la présente invention est de remédier aux problèmes cités en proposant un procédé de moulage de profilés, par exemple de joints d'étanchéité fermés permettant la réalisation de joints de grande circonférence vulcanisés en tout point, un même moule autorisant la fabrication de joints de même profil de diamètre illimité. En outre, les joints ainsi obtenus n'ont pas besoin d'être aboutés ou réunis par quelque moyen additionnel que ce soit, par exemple par collage à chaud ou à froid, pour en faire des éléments fermés, ou encore par chevauchement des deux extrémités, comme cela est décrit par exemple dans US 4 680 071.

Par ce procédé, les tolérances dimensionnelles de la section du joint sont plus serrées, par exemple de l'ordre de ± 0,25 mm pour une section de 15 mm, et l'état de surface beaucoup plus fin, ce qui permet d'optimiser l'étanchéité.

Dans la suite de la description, une bande brute sera entendue comme une bande de matériau élastomère au stade d'ébauche, c'est à dire non moulée, et coupée à la longueur correspondant au diamètre désiré du joint à obtenir. D'autre part, un tronçon sera considéré comme la longueur de bande brute correspondant à la longueur de la zone active du moule utilisé.

Un procédé par moulages successifs a par ailleurs déjà été décrit, dans DE 29 30 289, qui indique que de la matière brute est disposée en cercle fermé en vue du moulage.

Le but de l'invention indiqué ci-dessus est atteint grâce à un procédé de moulage d'un profilé fermé en élastomère, par exemple un joint, dans lequel on procède de manière séquentielle au moulage statique d'une bande brute par tronçons successifs contigus, la bande présentant deux extrémités ouvertes, chaque tronçon étant déplacé sensiblement de sa longueur pour prendre la place du précédent une fois l'opération de moulage de ce dernier terminée, le dernier tronçon étant constitué de la juxtaposition des deux extrémités de la bande brute. Avant l'opération de moulage du premier tronçon, on laisse brute la première extrémité de la bande brute, et de même, à la fin des opérations successives de moulage des tronçons contigus, on laisse également brute l'autre extrémité de la bande brute, ces deux extrémités étant ensuite juxtaposées pour être moulées ensemble, la longueur de cette juxtaposition représentant une longueur au moins égale à la longueur d'un tronçon.

Contrairement à ce qui se passe dans l'exposé US 4 680 071 cité plus haut, il n'y a donc aucun chevauchement des extrémités, qui ne peut qu'introduire une inhomogénéité dans le joint fini, nécessairement préjudiciable à la qualité et à la tenue de celui-ci.

Les deux extrémités à abouter par juxtaposition, sans chevauchement, peuvent être droites ou en biseaux, évidemment selon le même angle de biseaux pour pouvoir venir exactement en complément ou prolongement l'une de l'autre.

De préférence, le moule utilisé pour mettre en oeuvre ce procédé de moulage comprend deux outils dont l'un au moins est mobile, la mise en correspondance des cavités pratiquées sur les surfaces internes de chacun des outils définissant l'empreinte correspondant à la forme du joint à réaliser, ce moule étant un moule ouvert à ses deux extrémités, la longueur de la zone active du moule, soit la zone où chaque tronçon de bande est effectivement moulé, étant inférieure à la longueur totale du moule. Dans ce cas, la longueur des tronçons successifs et donc des déplacements du moule entre chaque opération de moulage est sensiblement égale, non à la longueur totale du moule, mais à la longueur de sa zone active.

La zone active du moule représente avantageusement une longueur comprise entre 35 et 60 % de la longueur totale du moule, par exemple 50 %.

On évite ainsi d'avoir à refroidir sur les bords du moule pour empêcher un début de vulcanisation dans les zones immédiatement extérieures, comme cela est préconisé par exemple dans GB 8554, même si ce document est étranger au moulage par tronçons successifs.

Selon un mode de réalisation préférentiel, les extrémités de la cavité ménagée dans un des outils se terminent chacune selon un angle compris entre 3 et 10 degrés.

De préférence, la hauteur de l'empreinte est plus grande aux extrémités du moule qu'en son milieu ; la température à l'intérieur de l'empreinte décroît graduellement à partir de chaque bord de la zone active du moule jusqu'à chacune de ses extrémités, cette variation de température entre chaque extrémité de l'empreinte et la zone active du moule étant comprise entre 25 et 35°C.

Préférentiellement, le dispositif pour mettre en oeuvre ce procédé de moulage comprend un tel moule, des moyens de chauffage du moule, et des moyens pour exercer une pression sur la bande brute, tels qu'une presse.

Avantageusement, un tel dispositif portable présente des moyens de chauffage internes au moule.

Avantageusement encore, ce dispositif portable est utilisé pour effectuer le moulage des extrémités brutes d'un joint obtenu au moyen du présent procédé pour la finition sur site, soit directement sur l'élément sur lequel il doit être monté, du joint encore ouvert par moulage des deux extrémités brutes juxtaposées de la bande brute constituant le dernier tronçon, avec tous les avantages que cela comporte et qui ont été énoncés en début d'exposé.

L'invention sera mieux comprise à l'étude d'un mode de réalisation pris à titre nullement limitatif et illustré dans les figures annexées dans lesquelles :
- les figures 1a, 1b, 1c, et 1d représentent les diverses étapes de moulage d'une bande brute selon le procédé de l'invention,
- la figure 2 est une vue frontale du moule utilisé dans le procédé selon l'invention,
- la figure 3 est une vue en coupe selon A-A du moule de la figure 2,
- la figure 4 est une vue selon le sens de la flèche F de l'extrémité de l'outil inférieur du moule de la figure 2,
- la figure 5 est une vue de face du type de dispositif fixe sur lequel le moule des figures 2 à 4 est monté,
- la figure 6 est une vue de côté du dispositif de la figure 5,
- la figure 7 est une vue frontale du dispositif portable de moulage de la jonction de joints obtenus au moyen du procédé selon l'invention, et
- la figure 8 est une vue de côté du dispositif portable de la figure 7.

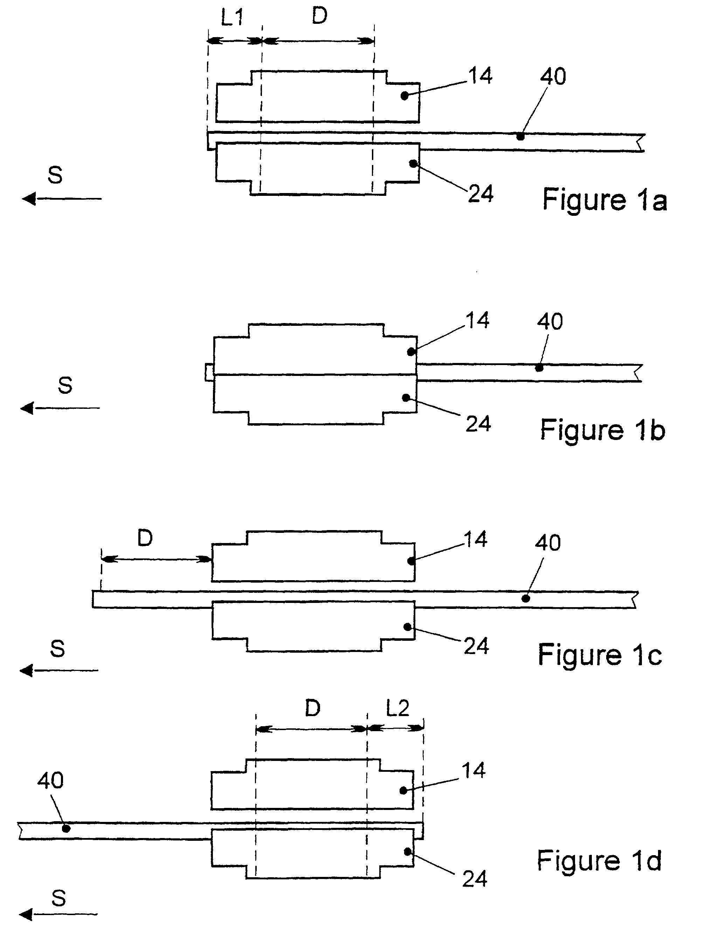

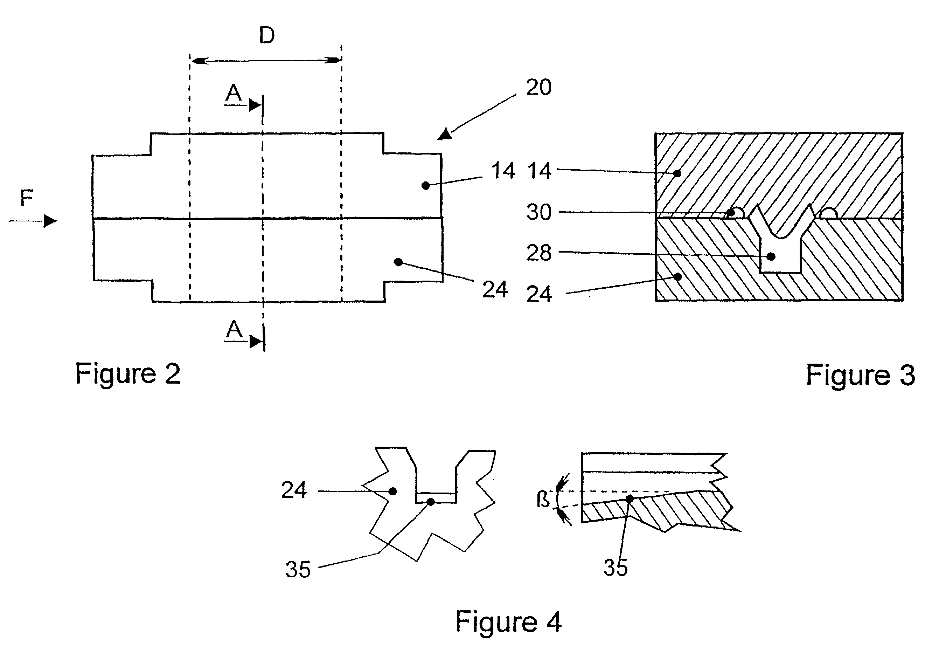

Tel qu'illustré sur la figure 1a, le procédé de moulage de joints d'étanchéité en élastomère utilise un moule métallique 20, défini sur les figures 2 à 4 et composé d'une partie supérieure, ou outil supérieur 14, et d'une partie inférieure, ou outil inférieur 24, et une bande brute 40.

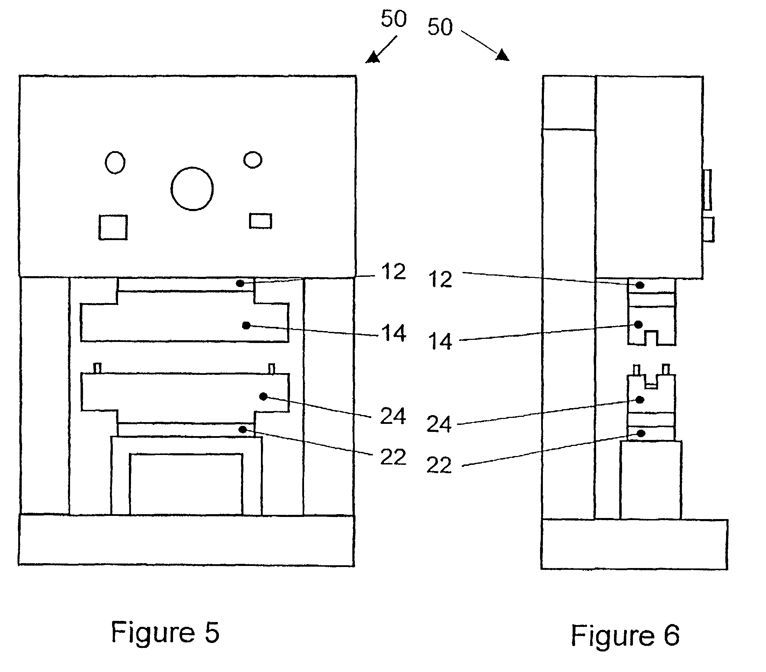

Ce moule 20 peut être monté sur un dispositif tel une presse fixe du type de la presse à colonnes 50 des figures 5 et 6, son outil supérieur 14 étant mobile verticalement, son outil inférieur 24, lui, étant fixe.

Le moule 20 fermé présente sur toute sa longueur une empreinte 28 définie par la mise en correspondance de deux cavités ménagées respectivement sur la face supérieure de l'outil inférieur 24 et sur la face inférieure de l'outil supérieur 14, comme visible sur la figure 3. Cette empreinte 28, débouchante à chacune des extrémités longitudinales du moule, détermine le profil du joint, la forme du joint étant indépendante de la courbure transversale de l'empreinte, qui peut donc tout à fait être rectiligne. Sur toute la longueur de l'outil supérieur 14 et de chaque côté de sa cavité est ménagée une rainure en arc de cercle, ou ramasse-gomme, 30, destinée à évacuer le surplus de matière débordant de l'empreinte 28 lors du moulage.

Sur la face supérieure de l'outil 14 et sous la face inférieure de l'outil 24 sont disposés respectivement des plateaux chauffants 12,22 illustrés sur les figures 5 et 6, et dont la longueur est inférieure à la longueur du moule 20. Ces plateaux sont destinés à chauffer le moule 20 afin d'obtenir une température des faces de l'empreinte 28 comprise entre 150 et 200°C, avec une valeur nominale de 160°C. Ce chauffage induit une température constante dans le moule 20 sur la distance D des figures 1a, 1d et 2, qui constitue la zone active du moule 20, soit la zone où chaque tronçon de bande est effectivement moulé. Le chauffage des plateaux est piloté par des moyens thermiques non illustrés le plus souvent intégrés à la presse utilisée, des moyens de régulation venant compléter ces moyens thermiques pour limiter la dérive en température à ± 7°C.

Sur chacun des côtés de la zone active du moule 20, la température décroît graduellement de telle manière à obtenir aux extrémités du moule une température de 25 à 35°C inférieure à celle de la zone active, la valeur nominale de cet écart étant de 30°C. Ce gradient de température est obtenu par la dissipation calorifique dans le volume du moule non chauffé du fait que les plateaux chauffants n'agissent pas sur les extrémités du moule, l'échange thermique y étant alors plus important.

Ce gradient de température, associé à la forme spécifique de chacune des extrémités de l'empreinte 28, permet d'éviter respectivement la génération d'effets de bord thermique et mécanique lors du moulage. Les effets de bord thermiques se caractérisent par une induction de vulcanisation du joint au niveau des extrémités du moule, et les effets de bord mécaniques par des marquages provoqués sur la surface du joint par les extrémités du moule lors de sa fermeture. Ces derniers sont évités grâce au plan incliné 35 selon lequel se termine chacune des extrémités de l'empreinte 28, et illustré sur la figure 4. Ce plan incliné, d'un angle β compris entre 3 et 10 degrés, de valeur nominale 5 degrés, est ménagé sur l'outil inférieur 24 sur une longueur de l'ordre du dixième de la longueur totale du moule.

Alternativement, des ailettes de refroidissement ménagées sur une partie de la surface du moule permettent d'augmenter la surface d'échange thermique dans le but d'atteindre de manière certaine le gradient de température escompté.

Dans la suite de la description et afin de simplifier le vocabulaire, nous entendrons par amont le côté du moule par lequel est amené chaque tronçon de bande brute 40 et par aval le côté du moule par lequel chaque tronçon de bande est évacué une fois moulé.

Tel qu'illustré précédemment, et afin de réaliser des joints d'étanchéité au moyen du procédé de moulage selon l'invention, on procède de la manière suivante :

On monte tout d'abord sur la presse utilisée et parallèlement à l'axe longitudinal de cette presse les deux outils 14,24 du moule 20 comprenant l'empreinte du joint à réaliser. Dans notre cas, nous considérons ce moule monté sur la presse fixe 50.

On actionne ensuite les moyens de commande du chauffage afin d'amener le moule à la température voulue et les moyens de régulation thermique afin de limiter la dérive en température.

On positionne la bande brute 40 en appui sur l'empreinte de l'outil inférieur 24.

Sur les figures 1a à 1d, on définit S comme le sens de déplacement de la bande brute 40, le côté droit du moule définissant l'amont et son côté gauche l'aval.

Tel qu'illustré sur la figure 1a, la première extrémité de la bande brute 40 est positionnée en dehors de la zone active du moule. Plus précisément, on décale vers l'aval l'extrémité de cette bande d'une distance L1 au moins égale à D/2 par rapport au bord aval de la zone active.

On referme alors le moule comme illustré sur la figure 1b, en actionnant les moyens de déplacement vertical de la presse 50. On s'assure que la pression de fermeture est comprise entre 100 et 200 Kg/cm², la pression nominale étant de 150 Kg/cm². Cette pression de fermeture stabilisée, on effectue le moulage du tronçon de bande brute 40 pendant une durée comprise entre 3 et 4 minutes, les valeurs de pression et de température étant constantes pendant toute la durée de moulage.

Une fois ce temps écoulé, on ouvre le moule et on décale la bande 40 dans le sens de la flèche S d'une distance D, tel qu'illustré sur la figure 1c. On procède alors comme précédemment, et ainsi de suite jusqu'au bout de la bande.

Lors de la dernière passe, et comme illustré sur la figure 1d, on laisse l'extrémité aval de cette bande brute 40 hors de la zone active du moule sur une distance L2 au moins égale à D/2, comme pour la première extrémité.

Afin de réaliser un joint fermé vulcanisé en tout point, on rassemble les deux extrémités brutes dans la zone active à l'intérieur du moule, la jonction entre celles-ci étant située de préférence sensiblement au centre de cette zone active, et on procède de manière identique au moulage d'une portion quelconque de bande.

Dans ce procédé, il est préférable que la longueur totale des deux extrémités brutes ne soit pas inférieure à D, afin d'éviter d'avoir à effectuer des recoupements avec des zones adjacentes déjà moulées. Ainsi, si cette longueur est égale à D, on procédera en une seule passe pour son moulage ; si cette longueur est supérieure à D, on procède en dernier lieu, après que la jonction ait été moulée, donc le joint fermé, à un moulage complémentaire de la portion de bande brute restante. Le gradient de température du moule à ses extrémités autorise le recoupement éventuel qui intervient sans conséquences sur la qualité du joint.

Lorsque le joint est terminé, on le place en étuve à une température de l'ordre de 125°C pendant un temps voisin de 30 minutes. Cet étuvage a pour objet d'homogénéiser ses caractéristiques.

Un joint d'étanchéité obtenu par ce procédé de moulage possède des caractéristiques optimales aux niveaux dimensionnel et élastique ; en effet, les tolérances obtenues par ce procédé sont serrées, de l'ordre de ± 0,25 mm pour une section de 15 mm, et, surtout, le joint est vulcanisé en tout point sans effets de bord et de manière uniforme, y compris à sa jonction, contrairement à d'autres procédés où celle-ci est le plus souvent effectuée par l'entremise d'un élément étranger externe.

Le procédé tel que décrit précédemment permet la réalisation de joints fermés vulcanisés en tout point et qu'il est possible de monter directement en première monte ou en remplacement sur les ensembles concernés. Toutefois, et notamment lors d'opérations de maintenance, il est techniquement et/ou économiquement impossible d'installer un joint fermé sans qu'un démontage substantiel des machines et, incidemment, un arrêt prolongé soient nécessaires.

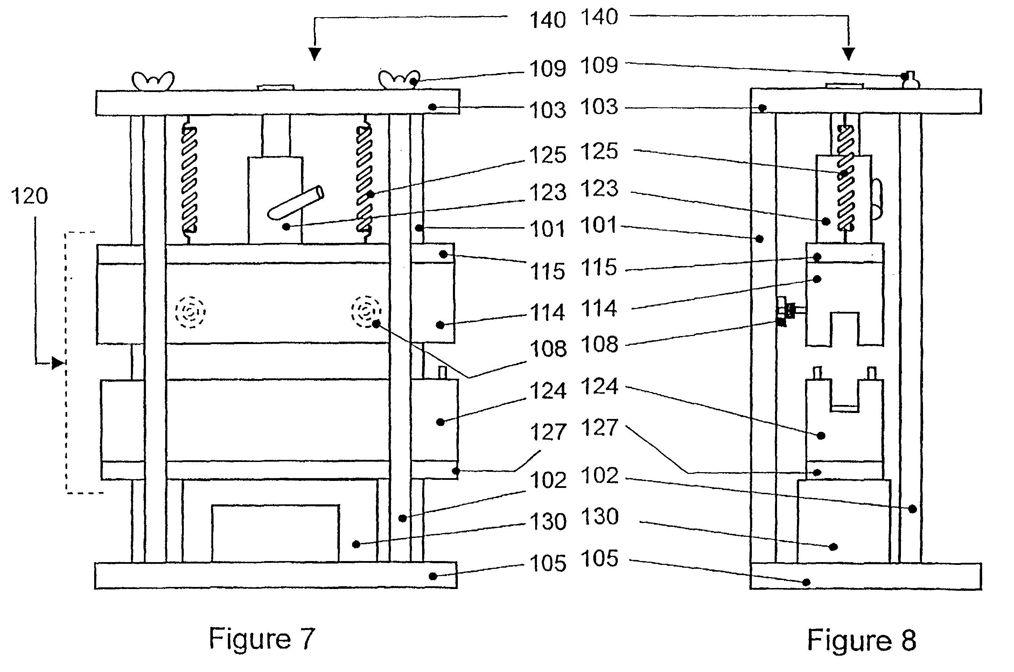

Le dispositif portable, tel qu'une presse portable 140 décrite sur les figures 7 et 8, permet de contourner ces difficultés en effectuant le moulage sur site, c'est à dire directement sur l'élément sur lequel le joint doit être monté, de la jonction de joints obtenus à l'aide du procédé selon l'invention, ce joint n'étant donc pas encore fermé. En outre, il est tout à fait envisageable de réaliser entièrement le joint en question au moyen de cette presse portable.

Cette presse portable 140 comprend un bâti col de cygne défini par une plaque de fond verticale 101, un socle 105, et une plaque supérieure 103. Sur cette presse 140 est monté un moule 120 composé d'une partie supérieure, ou outil supérieur 114, et d'une partie inférieure, ou outil inférieur 124, chacune d'elles étant réalisée en aluminium ou en alliage léger, principalement pour des questions de poids.

Ce moule est disposé parallèlement à l'axe longitudinal de la presse, l'outil inférieur 124 relié à un support 130 solidaire du socle 105, et l'outil supérieur 114 relié à des moyens de déplacement vertical. Sa structure est la même que celle du moule 20, ses dimensions étant en rapport avec celles de la presse 140, dont l'encombrement est pour des questions de poids et de maniabilité plus faible que celui de la presse 50 utilisée dans la précédente configuration décrite. Sur la face supérieure de l'outil inférieur 124, deux goupilles de centrage 118 sont disposées en diagonale, sensiblement à chacune des deux extrémités de l'outil ; ces goupilles sont destinées à coopérer avec des orifices de forme complémentaire en correspondance ménagés sur la face inférieure de l'outil supérieur, et ainsi à assurer le positionnement des deux outils lors de la fermeture du moule.

Chacun des outils 114,124 du moule 120 de la presse portable 140 comprend des moyens chauffants intégrés en lieu et place des plateaux chauffants 12,22 disposés sur les surfaces externes du moule 20. Ces moyens de chauffage sont pilotés par des modules externes de commande thermique et de régulation non représentés, les mêmes contraintes que pour le moule 20 étant à respecter concernant sa température, l'écart de température admissible, ainsi que le gradient de température jusqu'à ses extrémités.

Ces moyens de chauffage sont intégrés au moule 120 pour des raisons de confidentialité. En effet, cette presse portable 140 peut être amenée à être propriété d'un client, à l'inverse de la presse fixe 50 précédemment utilisée destinée, elle, à rester uniquement chez le fabricant. Ainsi, le client ne peut utiliser cette presse portable qu'avec des moules fournis par le fabricant.

Des plaques d'isolation thermique 115,127, destinées à limiter les pertes calorifiques lors du chauffage interne du moule, sont disposées respectivement sur les faces supérieure de l'outil 114 et inférieure de l'outil 124 et sont solidaires de chacune d'elles.

La mobilité verticale de l'outil supérieur 114 est assurée par des moyens de déplacement manuels 123, tels qu'un cric, agissant sur le dessus de l'outil. Le guidage de cet outil supérieur lors de son déplacement vertical est obtenu au moyen de patins 108 réglables prenant appui contre la plaque de fond 101.

Pour faciliter l'ouverture du moule, des moyens élastiques 125 sont disposés entre la plaque supérieure 103 du bâti et la structure de la partie mobile du moule.

Deux tirants frontaux 102 sont disposés verticalement sur la face avant de la presse, chacun proche d'une extrémité du moule. Ces tirants 102, dont une extrémité est munie d'un moyen de serrage manuel 109 et l'autre extrémité filetée, traversent la plaque supérieure 103 par un orifice prévu à cet effet et sont vissés dans un trou taraudé du socle 105. Ces tirants assurent la rigidité de l'ensemble et sont amovibles pour permettre d'ôter le joint dont la jonction a été moulée dans cette presse, car celui-ci est alors fermé.

Alternativement, en lieu et place de chaque tirant est disposé un bras articulé. Ce bras articulé pivote à une de ses extrémités autour d'un axe, l'autre extrémité coopérant avec des moyens de fixation. Lorsque ces moyens de fixation sont fermés, la rigidité de l'ensemble de la presse est assurée, l'ouverture de ces moyens de fixation permettant de faire pivoter le bras autour de son axe afin de permettre la libération du joint fermé.

Ce mode de réalisation à bras articulés fait preuve d'une plus grande facilité d'utilisation que le mode de réalisation initialement décrit, à tirants amovibles.

Tel qu'illustré précédemment, et pour assurer le moulage sur site de joints obtenus par le procédé selon l'invention, particulièrement pour les opérations de maintenance où il n'est pas techniquement et/ou économiquement possible d'introduire un joint fermé, le moulage de la jonction brute de tels joints est effectué comme suit au moyen de la presse portable 140, sur laquelle on a pris soin de monter un moule présentant une empreinte identique à celle du moule 20 monté sur la presse fixe 50.

Dans ce cas, le joint est réalisé comme décrit précédemment, mais on n'effectue pas avec la presse 50 l'opération de moulage des extrémités de la bande brute 40. On met alors en place ce joint ouvert sur le site en question, ce joint étant alors plus facile à installer, réduisant ainsi sensiblement le délai d'immobilisation de la machine en question. On procède alors à sa fermeture directement sur l'élément sur lequel il doit être monté par moulage au moyen de la presse portable 140 de la jonction des deux extrémités brutes.

Comme précédemment décrit, on effectue le moulage de cette jonction après avoir amené le moule 120 à la température voulue, et mis en oeuvre les moyens de régulation de température.

On positionne alors chacune des deux extrémités brutes sur l'empreinte de l'outil inférieur 124, dans la zone active du moule, la jonction entre les deux extrémités étant située de préférence sensiblement au centre de cette zone active. On abaisse alors l'outil supérieur 114 en actionnant manuellement les moyens de déplacement vertical 123, jusqu'à ce que le moule soit fermé et que la pression de fermeture soit comprise entre 100 et 200 Kg/cm², avec une valeur nominale de 150 Kg/cm². On maintient cet état pendant la durée de vulcanisation, soit entre 3 et 4 minutes.

Le moule 120 étant généralement sensiblement plus petit que le moule 20, la distance représentée par la somme des deux extrémités brutes excède souvent la zone active du moule 120. On procède alors en dernier lieu, après que la jonction ait été moulée, donc le joint fermé, à un moulage complémentaire de la portion de bande brute restante. Comme précédemment, le gradient de température du moule à ses extrémités autorise le recoupement éventuel qui intervient sans conséquences sur la qualité du joint.

Pour libérer la presse portable désormais retenue par le joint fermé, on dévisse complètement et on ôte les deux tirants frontaux 102, ce qui permet alors au joint de venir se plaquer sur l'élément sur lequel il doit être monté et à l'opérateur de retirer la presse.

Dans le mode de réalisation à bras articulés, on arrive au même résultat en ouvrant les moyens de fixation et en faisant pivoter chacun des deux bras autour de leur axe respectif.

Cette presse portable 140 est adaptée de préférence au moulage de jonction de joints obtenus au moyen du procédé selon l'invention.

Evidemment, il est tout à fait possible avec cette presse portable 140 de mouler la totalité du joint en partant comme avec la presse fixe 50 d'une bande brute 40 et en suivant les mêmes étapes qu'initialement décrites et illustrées sur les figures 1a à 1d.

De ce qui précède et comme déjà mentionné plus haut, on aura compris que, l'invention, bien qu'exposée en détail dans son application aux joints, s'applique plus généralement à tous types de profilés (et pas uniquement aux joints) ; en outre, de nombreuses améliorations peuvent lui être apportées sans sortir du cadre des revendications.

## Revendications

1. Procédé de moulage d'un profilé fermé, en élastomère par moulage d'une bande, dans lequel on procède de manière séquentielle à une opération statique de moulage d'une bande brute (40) par tronçons successifs contigus, la bande présentant deux extrémités ouvertes, chaque tronçon étant déplacé sensiblement de sa longueur pour prendre la place du précédent une fois l'opération de moulage de ce dernier terminée, le dernier tronçon étant constitué de la juxtaposition des deux extrémités de la bande brute, **caractérisé en ce qu'**avant l'opération de moulage du premier tronçon, on laisse brute la première extrémité de la bande brute (40), et qu'à la fin des opérations successives de moulage des tronçons contigus, on laisse également brute l'autre extrémité de la bande brute (40), ces deux extrémités étant ensuite juxtaposées pour être moulées ensemble, la longueur de cette juxtaposition représentant une longueur au moins égale à la longueur d'un tronçon.

2. Dispositif pour la mise en oeuvre du procédé selon la revendication 1 seulement constitué d'une presse de moulage sur laquelle est montée un moule (20) comprenant deux outils (14, 24) dont l'un au moins est mobile, la mise en correspondance des cavités pratiquées sur les surfaces internes de chacun des outils définissant l'empreinte (28) correspondant à la forme du profilé à réaliser, ce moule étant ouvert à ces deux extrémités, et comprenant une zone active (D) où chaque tronçon de bande est effectivement moulé, dont la longueur est inférieure à la longueur totale du moule.

3. Dispositif selon la revendication 2 **caractérisé en ce que** la longueur de la zone active (D) représente entre 35 et 60 % de la longueur totale du moule.

4. Dispositif selon les revendications 2 ou 3 **caractérisé en ce que** la longueur des tronçons successifs est sensiblement égale à la longueur de la zone active (D) du moule dans laquelle chaque tronçon de bande est effectivement moulé.

5. Dispositif selon l'une des revendications précédentes **caractérisé en ce que** les extrémités de la cavité ménagée dans un des outils (14, 24) se terminent chacune selon un angle (p) compris entre 3 et 10 degrés.

6. Dispositif selon l'une des revendications précédentes **caractérisé en ce que** la hauteur de l'empreinte (28) est plus grande aux extrémités du moule (20) qu'en son milieu.

7. Dispositif selon la revendication 5 ou 6 **caractérisé en ce que** la température à l'intérieur de l'empreinte (28) décroît graduellement à partir de chaque bord de la zone active du moule (20) jusqu'à chacune de ses extrémités.

8. Dispositif selon la revendication 7 **caractérisé en ce que** la variation de température entre chaque extrémité de l'empreinte (28) et la zone active du moule (20) est comprise entre 25 et 35°C.

9. Dispositif selon la revendication 2 dans une version portable (140), **caractérisé en ce qu'**il comprend une presse portable (140) comprenant un bâti col de cygne défini par une plaque de fond verticale (101), un sodé (105) et une plaque supérieure (103), le moule (120) selon l'une des revendications 5 à 8 étant monté sur la presse, l'outil inférieur (124) dudit moule relié à un support (130) solidaire du socle (105) et muni de plaque d'isolation thermique (115), et l'outil supérieur (114) muni de plaque d'isolation thermique (127) qui est relié à des moyens de déplacement vertical (123) guidés par des patins (108) réglables, deux tirants frontaux (102) dont l'une extrémité est munie d'un moyen de serrage manuel (109) et l'autre extrémité filetée étant disposée verticalement sur la face avant de ladite presse, chacun proche d'une extrémité du moule, lesdits tirants frontaux (102) amovibles traversant la plaque supérieure (103) par un orifice prévu à cet effet et vissés dans un trou taraudé du socle (105).

10. Dispositif selon la revendication 9 **caractérisé en ce que** les moyens de chauffage sont internes au moule.

11. Utilisation du dispositif portable (140) selon les revendications 9 ou 10, pour la fabrication de profilés sur site.

12. Utilisation du dispositif portable (140) selon la revendication 9 ou 10, pour le moulage des extrémités brutes d'un profilé obtenu au moyen du procédé selon la revendication 1 ou pour la finition sur site du profilé encore ouvert par moulage des deux extrémités juxtaposées de la bande brute (40) constituant le dernier tronçon.

13. Utilisation selon la revendication 11 ou 12, **caractérisée en ce que** les profilés sont des joints, notamment des joints d'étanchéité.

## Patentansprüche

1. Verfahren zum Formen eines in sich geschlossenen Formteiles aus einem Elastomermaterial durch Formen eines streifenartigen Bandes, bei dem aufeinanderfolgend ausgehend von einem statischen Vorgang des Formens eines unbearbeiteten Bandes (40) aus aufeinanderfolgenden aneinandergrenzenden Materialabschnitten das Band zwei offene Enden aufweist, jeder Materialabschnitt im wesentlichen um seine Länge versetzt wird, um den Platz des vorangehenden einzunehmen, sobald der Formvorgang des letzteren abgeschlossen ist, wobei der letzte Materialabschnitt durch eine gegenüberliegende Anordnung der beiden Enden des unbearbeiteten Bandes gebildet wird, **dadurch gekennzeichnet, dass** vor dem Formvorgang des ersten Materialabschnittes das erste Ende des unbearbeiteten Bandes (40) unbearbeitet verbleibt und dass am Ende der aufeinanderfolgenden Formvorgänge an den aneinandergrenzenden Materialabschnitten auch das andere Ende des unbearbeiteten Bandes (40) unbearbeitet verbleibt, wobei die beiden Enden anschließend einander gegenüberliegend angeordnet werden, um zusammen geformt zu werden, wobei die Länge der einander gegenüberliegenden Anordnung einer wenigstens der Länge eines Materialabschnittes entsprechenden Länge entspricht.

2. Vorrichtung zum Durchführen des Verfahrens nach Anspruch 1 mit einer Formpresse, an der eine Form (20) angebracht ist, die zwei Werkzeuge (14, 24) aufweist, von denen wenigstens eines beweglich ist, wobei die aufeinander abgestimmte Ausgestaltung der in die innenseitigen Oberflächen jedes Werkzeuges eingebrachten Ausnehmungen den Abformbereich (28) bildet, welcher der Gestalt des herzustellenden Formteiles entspricht, wobei die Form an ihren beiden Enden offen ist und einen aktiven Bereich (D) aufweist, in dem jeder Materialabschnitt des Bandes wirksam geformt wird und dessen Länge kleiner als die gesamte Länge der Form ist.

3. Vorrichtung nach Anspruch 2, **dadurch gekennzeichnet, dass** die Länge des aktiven Bereiches (D) zwischen 35 und 60% der gesamten Länge der Form entspricht.

4. Vorrichtung nach Anspruch 2 oder 3, **dadurch gekennzeichnet, dass** die Länge der aufeinanderfolgenden Materialabschnitten im wesentlichen gleich der Länge des aktiven Bereiches (D) der Form ist, in dem jeder Materialabschnitt des Bandes wirksam geformt wird.

5. Vorrichtung nach einem der voranstehenden Ansprüche, **dadurch gekennzeichnet, dass** die Enden der in eines der Werkzeuge (14, 24) eingebrachten Ausnehmung jeweils mit einem Winkel (β) zwischen 3 und 10 Grad enden.

6. Vorrichtung nach einem der voranstehenden Ansprüche, **dadurch gekennzeichnet, dass** die Höhe des Abformbereiches (28) an den Enden der Form (20) größer als in deren Mitte ist.

7. Vorrichtung nach Anspruch 5 oder 6, **dadurch gekennzeichnet, dass** die Temperatur im Innern des Abformbereiches (28) ausgehend von jedem Rand des aktiven Bereiches der Form (20) bis an deren Enden kontinuierlich abnimmt.

8. Vorrichtung nach Anspruch 7, **dadurch gekennzeichnet, dass** die Variationen der Temperatur zwischen jedem Ende des Abformbereiches (28) und des aktiven Bereiches der Form (20) zwischen 25 und 35° C liegt.

9. Vorrichtung nach Anspruch 2 in einer transportierbaren Ausführung (140), **dadurch gekennzeichnet, dass** sie eine transportierbare Presse (140) mit einem schwanenhalsartig ausgebildeten Rahmen aufweist, der durch eine vertikal ausgerichtete Grundplatte (101), einen Sockel (105) und eine obere Platte (103) gebildet ist, wobei die nach einem der Ansprüche 5 bis 8 ausgebildete Form (120) an der Presse angebracht ist, das untere Werkzeug (124) der Form mit einem mit dem Sockel (105) fest verbundenen Träger (130) verbunden und mit einer thermisch isolierenden Platte (115) ausgestattet ist, und mit dem mit einer thermisch isolierenden Platte (127) ausgestatteten oberen Werkzeug (114), welches mit vertikal wirkenden, durch einstellbare Backen (108) geführte Verschiebemittel (123) verbunden ist, mit zwei vorderseitigen Zugstreben (102), bei denen ein Ende mit einem von Hand betätigbaren Anzugmittel (109) ausgestattet ist und das mit einem Gewinde versehene andere Ende vertikal an der Vorderseite der Presse jeweils nahe eines Endes der Presse angeordnet ist, wobei die vorderseitigen demontierbaren Zugstreben (102) durch eine zu diesem Zweck vorgesehene Öffnung durch die obere Platte (103) durchtreten und in ein mit einem Gewinde versehenen Loch des Sockels (105) eingeschraubt sind.

10. Vorrichtung nach Anspruch 9, **dadurch gekennzeichnet, dass** die Heizmittel im Innern der Form angeordnet sind.

11. Verwendung der transportierbaren Vorrichtung (140) nach Anspruch 9 oder 10 zur Herstellung von Formteilen an Ort und Stelle.

12. Verwendung der transportierbaren Vorrichtung (140) nach Anspruch 9 oder 10 zum Formen der unbearbeiteten Enden eines gemäß dem Verfahren nach Anspruch 1 erhaltenen unbearbeiteten Formteiles oder zur Endbearbeitung des noch offenen Formteiles an Ort und Stelle durch Formen der beiden einander gegenüberliegenden, den letzten Materialabschnitt bildenden Enden des unbearbeiteten Bandes (40).

13. Verwendung nach Anspruch 11 oder 12, **dadurch gekennzeichnet, dass** die Formteile Dichtungen, insbesondere Fenster- beziehungsweise Türdichtungen, sind.

## Claims

1. Process for molding a closed elastomeric profile in a mold from a strip comprising sequentially molding adjacent successive segments of an unprocessed strip (40) in a static operation, the strip having two opened ends, wherein each segment is displaced substantially by its same length to take a place of a previous segment after molding the previous segment, the last segment is formed of juxtaposition between the two ends of the unprocessed strip (40), wherein the first end of the strip is left unprocessed prior to molding a first segment, and wherein the second end of the strip (40) is left unprocessed after successive operations of molding adjacent segments, these two ends of the strip then being juxtaposed to be molded together, the length of juxtaposition representing a length at least equal to a length of a segment.

2. Device to implement the process according to claim 1 which only consists in a molding press on which is mounted a mold (20) comprising two tools (14,24) at least one of which is movable, a connection of cavities made in internal surfaces of each of the tools defining an impression (28) corresponding to a form of the profile to be produced, the mold being opened at two ends, and an active region (D) wherein each segment of the strip is effectively molded, the length of the active region being smaller than a total length of the mold.

3. Device according to claim 2, wherein the length of the active region (D) is about 35 and 60 % of the total length of the mold.

4. Device according to claims 2 or 3, wherein the length of the successive segments is substantially equal to the length of the active region (D) of the mold in which each segment of strip is effectively molded.

5. Device according to any of the preceding claims, wherein the ends of the cavity made in one of the tools (14,24) end at an angle (β) between 3 and 10 degrees.

6. Device according to one of the preceding claims, wherein the depth of the impression (28) is greater at the ends of the mold (20) then in a center of the mold.

7. Device according to claim 5 or 6, wherein the temperature in the interior portion of the impression (28) decreases gradually from each edge of the active region (20) of the mold to each end of the mold.

8. Device according to claim 7 wherein the variation of the temperature between each end of the impression (28) and the active region of the mold (20) is between 25 and 35° C.

9. Device according to claim 2 in a portable version (140), which includes a portable press (140) comprising a swan-neck frame defined by a vertical base plate (101), a base (105) and an upper plate (103), the mold (120) according to one of the claims 5 to 8 being mounted on the press (140), the lower tool (124) of the mold connected to a support (130) integral with the base (105) and provided with a thermic insulating plate (115), and the upper tool (114) provided with a thermic insulating plate (127) which is connected to means of vertical displacement (123) guided by means of adjustable pads (108), two frontal ties (102) of which one end is equipped with a manual gripping means (109) and the other threaded end being arranged vertically on the front face of the press, each one close to one end of the mold, said movable frontal ties (102) pass through the upper plate (103) by an opening provided for this purpose and screwed in a threaded hole of the base (105).

10. Device according to claim 9 wherein the heating means are internal to the mold.

11. Use of the portable device (140) according to claim 9 or 10, for on-site production of profiles.

12. Use of the portable device (140) according to claim 9 or 10, for the molding of the unprocessed ends of a profile produced by means of the process according to claim 1 or for on-site finishing of the profile still opened by molding of the two juxtaposed ends of the unprocessed strip (40) thus constituting the last segment.

13. Use according to claim 11 or 12, wherein the profiles comprise joints, particularly sealed joints.
